# FASCICULE DE BREVET EUROPEEN

(11) **EP 3 463 995 B1**
(45) Date de publication et mention de la délivrance du brevet: **17.06.2020**
(21) Numéro de dépôt: 17718561.8
(22) Date de dépôt: 25.04.2017
(51) Int. Cl.: B60S 1/56, G02B 27/00, B60S 1/52

(54) **SYSTEME DE NETTOYAGE D'UN CAPTEUR OPTIQUE, ENSEMBLE COMPRENANT UN TEL SYSTEME ET VEHICULE AUTOMOBILE ASSOCIE**
SYSTEM ZUR REINIGUNG EINES OPTISCHEN SENSORS, ANORDNUNG MIT SOLCH EINEM SYSTEM UND ZUGEHÖRIGES KRAFTFAHRZEUG
SYSTEM FOR CLEANING AN OPTICAL SENSOR, ASSEMBLY COMPRISING SUCH A SYSTEM, AND ASSOCIATED MOTOR VEHICLE

(30) Priorité: 27.05.2016 FR 1654760
(43) Date de publication de la demande: 10.04.2019
(73) Titulaire: Valeo Systèmes d'Essuyage, 78322 Le Mesnil Saint Denis (FR)
(72) Inventeur: GIRAUD, Frédéric, 78322 Le Mesnil Saint Denis (FR)
(74) Mandataire: Valeo Systèmes d'Essuyage
(86) Numéro de dépôt international: PCT/EP2017/059771
(87) Numéro de publication internationale: WO 2017/202562

(56) Documents cités:
- EP-A1- 3 006 279
- WO-A1-2016/074933
- DE-A1-102014 117 165

## Description

La présente invention concerne le domaine des capteurs optiques et en particulier les capteurs optiques destinés à être montés sur un véhicule automobile et plus précisément les systèmes de nettoyage de tels capteurs optiques.

Le document DE 10 2014 117 165 A1 est considéré comme l'état de la technique le plus proche de l'objet de la revendication 1.

De nos jours, des caméras de vision arrière équipent un grand nombre des véhicules automobiles actuels, et elles font en particulier partie d'un système d'aide au parking qui permet de se garer plus facilement dans un emplacement sans se retourner et de détecter les obstacles situés derrière le véhicule. Des caméras sont également utilisées à l'avant du véhicule ou sur les côtés en remplacement ou en complément des rétroviseurs pour améliorer la vision du conducteur.

On connaît des caméras de recul qui sont installées à l'intérieur de l'habitacle contre la lunette / vitre arrière en visant vers l'arrière depuis la lunette arrière du véhicule. Ces caméras sont bien protégées des influences climatiques extérieures et peuvent par exemple bénéficier des systèmes de dégivrage et de nettoyage de la lunette arrière, par exemple d'un fil chauffant intégré dans la vitre de la lunette arrière.

Cependant, l'angle de vue n'est pas optimal, notamment pour une aide au parking et pour cette raison, on préfère que la caméra soit agencée au niveau du pare-choc arrière ou au niveau de la plaque d'immatriculation arrière du véhicule.

Dans ce cas, la caméra est donc fortement exposée aux projections de saletés qui peuvent se déposer sur son optique et ainsi réduire son efficacité, voire la rendre inopérante.

En particulier par temps de pluie ou en cas de neige en hiver, on constate des projections de pluie, de saletés, de sels ou de neige qui peuvent grandement affecter l'opérabilité du système de vision.

Il apparaît donc nécessaire de nettoyer régulièrement ces systèmes de vision pour assurer un fonctionnement optimal.

Or, en particulier si le véhicule comprend plusieurs capteurs optiques, la quantité de liquide de nettoyage nécessaire peut être importante ce qui signifie que le réservoir de liquide nettoyant doit être très grand pour éviter à l'utilisateur du véhicule de devoir remplir trop souvent le réservoir de liquide nettoyant.

Mais, un réservoir de grande taille nécessite un grand volume qui n'est pas forcément disponible dans un véhicule.

La présente invention vise donc à résoudre au moins partiellement ce problème en réduisant la consommation de liquide nécessaire au nettoyage des capteurs optiques.

A cet effet, la présente invention concerne un système de nettoyage d'un capteur optique, notamment de véhicule automobile, comprenant :
- un élément de projection d'un liquide de nettoyage,
- un réservoir d'un liquide de nettoyage en communication fluidique avec l'élément de projection de liquide de nettoyage,
- une pompe configurée pour pomper le liquide de nettoyage du réservoir vers l'élément de projection du liquide de nettoyage,
le système comprenant également une paroi de confinement du liquide de nettoyage qui est mobile entre une position escamotée dans laquelle la paroi de confinement est configurée pour être positionnée hors du champ de vision du capteur optique et une position de nettoyage dans laquelle la paroi de confinement est configurée pour être positionnée devant le capteur optique de façon à définir une enceinte de récupération du liquide de nettoyage et en ce qu'il comprend une conduite d'évacuation du liquide de nettoyage reliée d'une part à l'enceinte de récupération en position de nettoyage et d'autre part au réservoir du liquide de nettoyage.

De façon complémentaire et indépendante plusieurs aspects particuliers de différentes mises en œuvre de l'invention vont maintenant être décrits.

Selon un aspect de la présente invention, la paroi de confinement présente sensiblement une forme de calotte sphérique dont la partie concave est configurée pour être orientée vers le capteur optique.

Selon un aspect supplémentaire de la présente invention, l'enceinte de récupération est positionnée plus haut que le réservoir lorsque le système est à l'état monté de sorte que l'écoulement du liquide de nettoyage de l'enceinte de récupération du liquide de nettoyage vers le réservoir est réalisé par gravité.

Selon un aspect additionnel de la présente invention, le système comprend une pompe supplémentaire disposée dans la conduite d'évacuation du liquide de nettoyage. Cette dernière est notamment configurée pour pomper le liquide de nettoyage de l'enceinte de récupération du liquide de nettoyage vers le réservoir.

Selon un autre aspect de la présente invention, le système comprend également un filtre disposé dans la conduite d'évacuation du liquide de nettoyage pour filtrer des particules de saleté, en particulier dont la taille est supérieure à une taille prédéterminée.

Selon un aspect supplémentaire de la présente invention, le système comprend un support du capteur optique. Au moins une partie de la conduite d'évacuation est par exemple intégrée dans le support du capteur optique.

Selon un aspect additionnel de la présente invention, l'élément de projection est porté par la paroi de confinement.

Selon un autre aspect de la présente invention, l'élément de projection est positionné sur la paroi de confinement de manière à venir en regard du capteur optique en position de nettoyage.

Selon un aspect supplémentaire de la présente invention, la paroi de confinement comprend un canal interne d'alimentation relié de manière fluidique à l'élément de projection.

Selon un aspect additionnel de la présente invention, la paroi de confinement est mobile en rotation.

Selon un autre aspect de la présente invention, le système comprend un actionneur configuré pour déplacer la paroi de confinement entre la position escamotée et la position de nettoyage.

Selon un aspect supplémentaire de la présente invention, l'actionneur est un actionneur électrique présentant en particulier un arbre de sortie qui est couplé à la paroi de confinement.

Selon un aspect additionnel de la présente invention, l'actionneur comprend un vérin hydraulique.

Selon un autre aspect de la présente invention, le vérin hydraulique comprend:
- un corps de vérin comprenant un embout d'entrée destiné à être en communication fluidique avec la pompe et un embout de sortie destiné à être en communication fluidique avec l'élément de projection,
- un piston séparant le corps de vérin en une première chambre en communication fluidique avec l'embout d'entrée et une deuxième chambre, ledit piston étant mobile d'une part entre une position proximale dans laquelle le volume de la première chambre est minimale et dans laquelle l'embout de sortie est en communication fluidique avec la deuxième chambre et d'autre part une position distale dans laquelle le volume de la première chambre est maximal et dans laquelle l'embout de sortie est en communication fluidique avec la première chambre de manière à alimenter l'élément de projection en liquide de nettoyage, le déplacement du piston de la position proximale à la position distale étant provoqué par le liquide de nettoyage pompé par la pompe.

Selon un aspect supplémentaire de la présente invention, le vérin hydraulique comprend un moyen élastique de rappel disposé dans la deuxième chambre. Le moyen de rappel est notamment configuré pour provoquer le déplacement du piston de la position distale à la position proximale, en particulier lorsque la pompe est inactive.

Selon un aspect additionnel de la présente invention, l'élément de projection est un gicleur, en particulier configuré pour projeter un liquide de nettoyage à une pression d'entrée dans le gicleur comprise entre 1 et 1,7 bars.

Selon un autre aspect de la présente invention, le système comprend également une unité de traitement configurée pour activer la pompe. Cette dernière est par exemple activée pendant un premier temps prédéterminé lorsqu'une commande de nettoyage est reçue.

Selon un aspect supplémentaire de la présente invention, l'unité de traitement est également configurée pour activer la pompe supplémentaire. Cette dernière est par exemple activée pendant un deuxième temps prédéterminé lorsqu'une commande de nettoyage est reçue.

La présente invention concerne également un ensemble comprenant un capteur optique et un système de nettoyage du capteur optique tel que décrit précédemment.

La présente invention concerne également un véhicule automobile comprenant un ensemble tel que décrit précédemment.

D'autres caractéristiques et avantages de l'invention ressortiront de la description suivante, donnée à titre d'exemple et sans caractère limitatif, en regard des dessins annexés sur lesquels :
- la figure 1 représente un schéma d'un système de nettoyage d'un capteur optique selon un premier mode de réalisation et dans une position escamotée ;
- la figure 2 représente un schéma d'un système de nettoyage d'un capteur optique selon le premier mode de réalisation et dans une position de nettoyage ;
- la figure 3 représente un schéma d'un système de nettoyage d'un capteur optique selon une variante du premier mode de réalisation et dans une position de nettoyage ;
- la figure 4 représente un schéma d'un système de nettoyage d'un capteur optique selon un deuxième mode de réalisation et dans une position escamotée;
- la figure 5 représente un schéma d'un système de nettoyage d'un capteur optique selon le deuxième mode de réalisation et dans une position de nettoyage ;
- La figure 6 représente un schéma d'un système de nettoyage d'un capteur optique selon un troisième mode de réalisation et dans une position escamotée ;
- La figure 7 représente un schéma d'un système de nettoyage d'un capteur optique selon un troisième mode de réalisation et dans une position de nettoyage ;
- les figure 8, 9 et 10 représentent des schémas d'un véhicule automobile comprenant un capteur optique à différents emplacements du véhicule.

Sur toutes les figures, les éléments ayant des fonctions identiques portent les mêmes numéros de référence.

Dans la suite de la description, les expressions « en amont », respectivement « en aval », pour désigner des éléments d'un dispositif hydraulique désignent une position avant, respectivement après, d'un élément par rapport à un autre dans le sens d'écoulement du liquide ou fluide.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou inter-changées pour fournir d'autres réalisations.

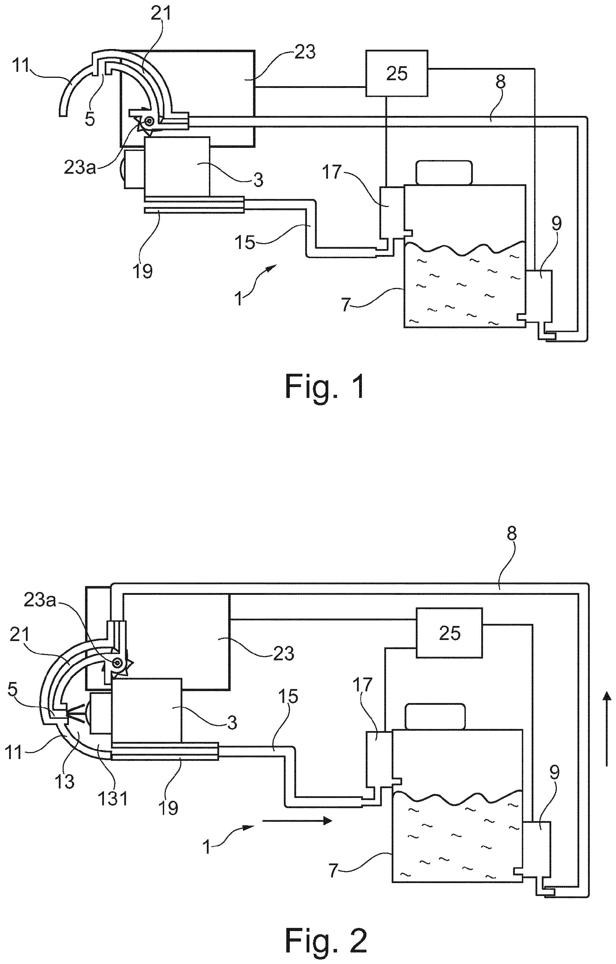

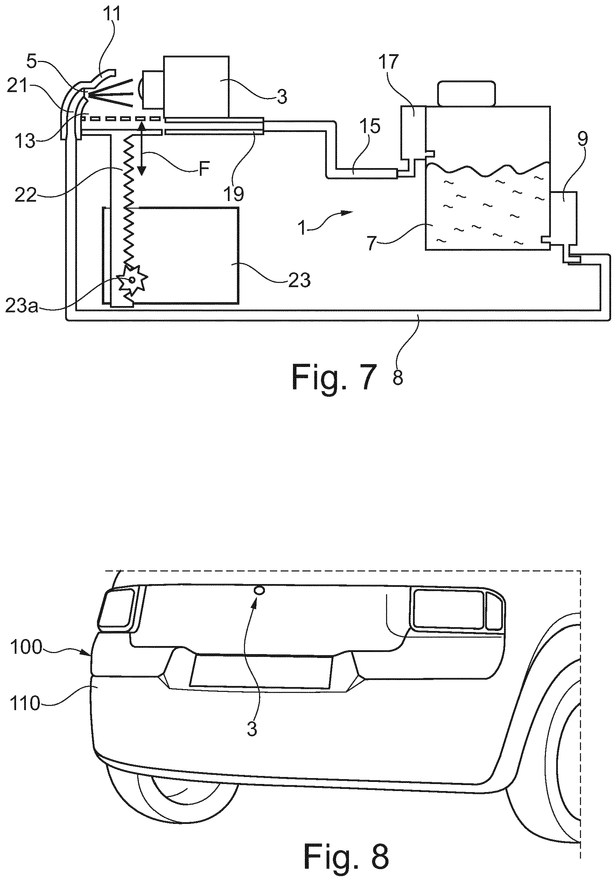

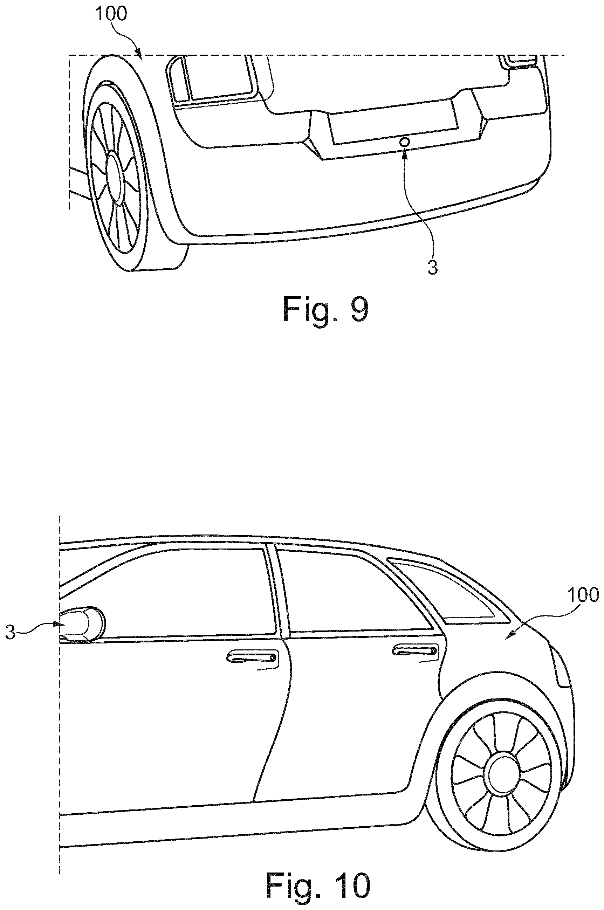

La figure 1 représente un exemple d'un capteur optique 3 et d'un système de nettoyage 1 du capteur optique 3 selon un premier mode de réalisation. Un tel système de nettoyage 1 est notamment destiné à être installé sur un véhicule automobile 100, le capteur optique 3 étant par exemple une caméra de recul située au niveau d'une façade arrière (pare-choc arrière 110, plaque d'immatriculation ou porte de coffre...) du véhicule 100 comme représenté sur la figure 8. Cependant, d'autres types de capteur optique 3 et d'autres emplacements sur le véhicule peuvent être utilisés comme par exemple au niveau d'une façade avant telle que représentée sur la figure 9 ou au niveau d'une porte latérale comme représentée sur la figure 10.

Le capteur optique 3 comporte par exemple une optique convexe (bombée) tel qu'une optique œil de poisson (« fish-eye » en anglais).

Le système de nettoyage 1 comprend un élément de projection 5 d'un liquide de nettoyage configuré pour projeter du liquide de nettoyage sur l'objectif du capteur optique 3 lors du nettoyage du capteur optique 3. L'élément de projection 5 est par exemple réalisé par un gicleur configuré pour projeter un liquide de nettoyage à une pression comprise entre 1 et 1,7 bars ou par une buse de projection permettant de pulvériser le liquide de nettoyage sur le capteur optique 3.

Le système de nettoyage 1 comprend également un réservoir 7 du liquide de nettoyage en communication fluidique avec l'élément de projection 5, par exemple via un tuyau d'approvisionnement 8.

Le système de nettoyage 1 comprend également au moins une pompe 9 configurée pour pomper le liquide de nettoyage du réservoir 7 et alimenter l'élément de projection 5 en liquide de nettoyage issu du réservoir 7. La pompe 9 est par exemple une pompe électrique. Le tuyau d'approvisionnement 8 peut comprendre une valve anti-retour configurée pour empêcher le liquide de nettoyage de revenir de l'élément de projection 5 vers la pompe 9 lorsque la pompe 9 est inactive. A titre d'exemple non limitatif, la pompe 9 est ici agencée au niveau du réservoir 7, à l'interface avec le tuyau d'approvisionnement 8 mais d'autres agencements de la pompe 9 peuvent également être choisis.

Le système de nettoyage 1 comprend également une paroi de confinement 11 du liquide de nettoyage qui est mobile entre une position escamotée dans laquelle la paroi de confinement 11 est positionnée hors du champ de vision du capteur optique 3 et une position de nettoyage dans laquelle la paroi de confinement 11 est positionnée devant le capteur optique 3 de façon à définir une enceinte de récupération 13 du liquide de nettoyage à l'état assemblé du système de nettoyage 1.

Selon un premier et un deuxième modes de réalisation décrits sur les figures 1 à 5, la paroi de confinement 11 est montée mobile en rotation ou plus spécifiquement en pivotement. Sur les figures 1 à 3, la paroi de confinement 11 est entraînée par un actionneur 23. La paroi de confinement 11 est alors couplée à l'actionneur 23 qui permet son pivotement entre la position escamotée représentée sur la figure 1 et la position de nettoyage représentée sur la figure 2.

La paroi de confinement 11a, par exemple, une forme de calotte sphérique dont la partie concave est orientée vers le capteur optique 3 en position de nettoyage. Cependant, d'autres formes peuvent également être utilisées. La paroi de confinement 11 forme ainsi une enceinte de récupération 13 du liquide de nettoyage devant le capteur optique 3.

La paroi de confinement 11 peut également porter l'élément de projection 5. L'élément de projection 5 est par exemple positionné sur la paroi de confinement 11 de manière à venir en regard de l'objectif du capteur optique 3 en position de nettoyage comme représenté sur la figure 2.

L'élément de projection 5 peut également être intégré dans la paroi de confinement 11. Dans ce cas, un canal interne d'alimentation 21 peut être ménagé dans la paroi de confinement 11 et être relié de manière fluidique à l'élément de projection 5. Le canal interne d'alimentation 21 relie alors l'élément de projection au tuyau d'approvisionnement 8. Le tuyau d'approvisionnement 8 est par exemple flexible pour s'adapter aux mouvements de la paroi de confinement 11.

Alternativement, le tuyau d'approvisionnement 8 peut être fixé sur la paroi de confinement 11 jusqu'à l'élément de projection 5, par exemple par des agrafes ou des crochets de maintien ou tout autre moyen de fixation connu de l'homme du métier.

Le système de nettoyage 1 comprend également une conduite d'évacuation 15 du liquide de nettoyage reliée à l'enceinte de récupération 13 en position de nettoyage et configurée pour permettre de récupérer le liquide de nettoyage après le nettoyage du capteur optique 3 et de permettre le retour du liquide de nettoyage vers le réservoir 7.

La conduite d'évacuation 15 est par exemple reliée, en position de nettoyage, à une partie basse 131 de l'enceinte de récupération 13 lorsque le système de nettoyage 1 est à l'état monté de manière à ce que le liquide de nettoyage s'écoule par gravité dans l'enceinte de récupération 13 vers la conduite d'évacuation 15.

La conduite d'évacuation 15 est par exemple placée sous le capteur optique 3 (à l'état monté du système de nettoyage 1) et la paroi de confinement 11 vient en contact avec la conduite d'évacuation 15 en position de nettoyage. Un joint ou un matériau souple peut être utilisé à l'interface entre la paroi de confinement 11 et la conduite d'évacuation 15.

De plus, la conduite d'évacuation 15 peut être intégrée au moins partiellement à un support 19 du capteur optique 3. Le support 19 est par exemple placé sous le capteur optique 3 et comprend un canal interne, réalisé par exemple par moulage, permettant l'écoulement du liquide de nettoyage.

Alternativement, la conduite d'évacuation 15 peut être fixée sur le support 19 du capteur optique 3 par exemple par des agrafes ou des crochets de maintien ou tout autre moyen de fixation connu de l'homme du métier.

L'écoulement du liquide de nettoyage dans la conduite d'évacuation 15 de l'enceinte de récupération 13 jusqu'au réservoir 7 peut être réalisé par gravité. Dans ce cas, le réservoir 7 sera positionné à une hauteur inférieure au capteur optique 3 (à l'état monté du système de nettoyage 1) et à l'enceinte de récupération 13. Dans ce cas, la conduite d'évacuation 15 aura une orientation inclinée vers le réservoir 7.

L'écoulement dans la conduite d'évacuation 15 peut également être réalisé grâce à l'action de la pompe 9. Dans ce cas, les éléments du système de nettoyage 1 et en particulier la paroi de confinement 11 seront configurés de manière à obtenir un système fermé hermétiquement dans lequel circule le liquide de nettoyage.

Alternativement, comme représenté sur les figures 1 à 3, une pompe supplémentaire 17 peut être disposée au niveau de la conduite d'évacuation 15 pour aspirer le liquide de nettoyage de l'enceinte de récupération 13 et le pomper jusqu'au réservoir 7.

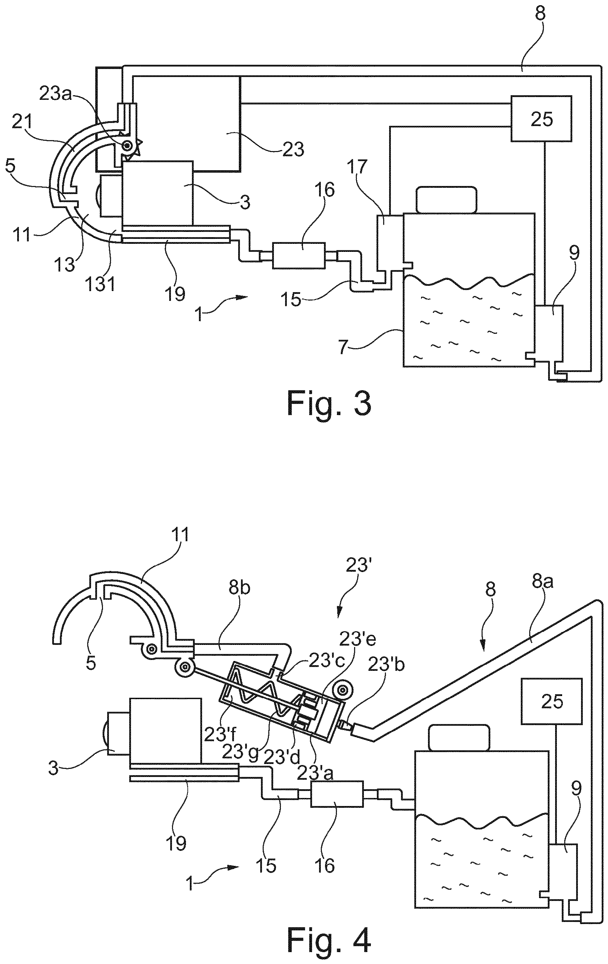

Comme représenté sur la figure 3, un filtre 16 peut également être disposé dans la conduite d'évacuation 15 de manière à filtrer les particules de saleté dont la taille est supérieure à une taille prédéterminée. Dans le cas d'un système de nettoyage 1 comprenant une pompe supplémentaire 17, le filtre 16 est positionné en amont de la pompe supplémentaire 17 ce qui permet de protéger la pompe supplémentaire 17. Le filtre 16 est par exemple réalisé par un filtre à charbons ou un filtre à ultraviolets ou tout autre type de filtre connus de l'état de la technique.

Selon les modes de réalisation des figures 1 à 3, l'actionneur 23 peut être un actionneur électrique, notamment un moteur électrique présentant un arbre de sortie 23a, configuré pour déplacer la paroi de confinement 11 entre la position escamotée et la position de nettoyage.

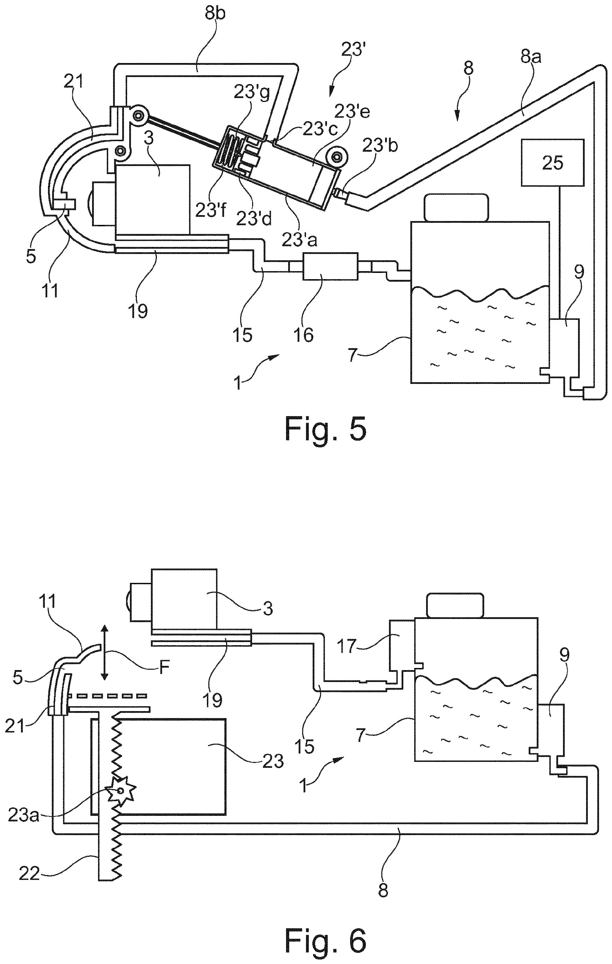

Selon un deuxième mode de réalisation représenté sur les figures 4 et 5, l'actionneur 23 peut être un actionneur hydraulique réalisé sous la forme d'un vérin hydraulique 23'.

Le vérin hydraulique 23' comprend un corps de vérin 23'a par exemple de forme cylindrique comprenant un embout d'entrée 23'b relié fluidiquement à la pompe 9 via une première partie 8a du tuyau d'approvisionnement 8 et un embout de sortie 23'c relié fluidiquement à l'élément de projection 5 via une deuxième partie 8b du tuyau d'approvisionnement 8.

L'embout d'entrée 23'b est par exemple situé à une première extrémité du corps de vérin 23'a. L'embout de sortie 23'c est par exemple situé sur un bord latéral du corps de vérin 23'a.

Le vérin hydraulique 23' comprend également un piston 23'd séparant le corps de vérin 23'a en une première chambre 23'e et une deuxième une chambre 23'f.

La première chambre 23'e est en communication fluidique avec l'embout d'entrée 23'b de manière à recevoir le liquide de nettoyage pompé dans la première partie 8a du tuyau d'approvisionnement 8 par la pompe 9.

Dans la deuxième chambre 23'f est disposé un moyen élastique de rappel 23'g, par exemple un ressort hélicoïdal.

Le piston 23'd est mobile entre une position proximale et une position distale. Dans la position proximale représentée sur la figure 4, le volume de la première chambre 23'e est minimale et l'embout de sortie 23'c est en communication fluidique avec la deuxième chambre 23'f. Dans la position distale représenté sur la figure 5, le volume de la première chambre 23'e est maximal et l'embout de sortie 23'c est en communication fluidique avec la première chambre 23'e. Ainsi, en position distale, le liquide de nettoyage est transmis de la première chambre 23'c vers la deuxième partie 8b du tuyau d'approvisionnement 8 de manière à alimenter l'élément de projection 5 en liquide de nettoyage.

Le déplacement du piston 23'd de la position proximale à la position distale est provoqué par le liquide de nettoyage pompé par la pompe 9. De plus, le piston 23'd est relié à la paroi de confinement 11, par exemple par une liaison pivot de sorte que le déplacement du piston 23'd de la position proximale à la position distale provoque le déplacement de la paroi de confinement 11 de la position escamotée à la position de nettoyage. Ainsi, avec un tel vérin hydraulique 23', l'actionnement de la pompe 9 permet à la fois de faire passer la paroi de confinement 11 en position de nettoyage et d'alimenter l'élément de projection 5 en liquide de nettoyage.

Le moyen élastique de rappel 23'g est configuré pour provoquer le déplacement du piston 23'd de la position distale à la position proximale lorsque la pompe 9 est inactive.

Les figures 4 et 5 différent également des figures 1 à 3 par l'absence d'une pompe supplémentaire 17. Dans ce cas l'écoulement du liquide de nettoyage de l'enceinte de récupération 13 vers le réservoir 7 se fait par gravité comme décrit précédemment. Hormis, l'actionneur 23 et la pompe supplémentaire 17, le système de nettoyage 1 des figures 4 et 5 est similaire au système de nettoyage décrit à partir des figures 1 à 3.

Le système de nettoyage 1 peut également comprendre une unité de traitement 25 configurée pour piloter au moins l'un des éléments actifs suivants :
- la pompe 9,
- la pompe supplémentaire 17 et,
- l'actionneur 23.

L'unité de traitement 25 est connectée à ou aux éléments actifs à piloter par une interface de communication telle qu'une liaison filaire ou des moyens de communication sans fil, par exemple via des ondes électromagnétiques comme une interface Wifi.

L'unité de traitement 25 est configurée pour recevoir une commande de nettoyage et pour actionner la pompe 9 pendant un premier temps prédéterminé.

Dans le cas d'un système de nettoyage 1 comprenant un actionneur électrique 23, l'unité de traitement 25 commande également l'actionneur électrique 23 pour positionner la paroi de confinement 11 en position de nettoyage avant ou en même temps que l'actionnement de la pompe 9. Dans le cas d'un système de nettoyage 1 comprenant une pompe supplémentaire 17, l'unité de traitement 25 commande également l'actionnement de la pompe supplémentaire 17 pendant un deuxième temps prédéterminé. Le deuxième temps prédéterminé est par exemple supérieur au premier temps prédéterminé pour permettre l'évacuation du liquide de nettoyage à la fin du premier temps prédéterminé. Le deuxième temps prédéterminé peut aussi avoir la même durée que le premier temps prédéterminé mais être décalé temporellement par rapport au premier temps pour que la pompe supplémentaire 17 continue à être actionnée pendant une durée prédéterminée lorsque la pompe 9 est désactivée de manière à permettre la récupération du liquide de nettoyage utilisé.

Dans le cas d'un système de nettoyage 1 comprenant un actionneur hydraulique 23', seule la pompe 9 et éventuellement la pompe supplémentaire 17 sont pilotées par l'unité de traitement 25. Le temps prédéterminé d'activation de la pompe 9 peut être plus long dans ce mode de réalisation.

La commande de nettoyage reçue par l'unité de traitement 25 peut être une commande initiée par un utilisateur, par exemple via un élément de commande du tableau de bord ou peut être initiée automatiquement. La commande automatique peut être une commande à intervalles de temps régulier ou une commande en fonction d'une détection particulière voire une combinaison des deux. Par exemple, un nettoyage peut être initié au début ou à la fin de chaque utilisation du capteur optique 3. Un nettoyage peut aussi être commandé après une durée prédéterminée d'utilisation du capteur optique 3. Cette durée prédéterminée pouvant être modifiée lorsque des conditions particulières, par exemple lorsque des conditions pluvieuses sont détectées. La détection de pluie se faisant par exemple via un capteur dédié qui peut être utilisé également pour le pilotage des essuie-glaces. Un dispositif de traitement d'images peut également être associé au capteur optique 3 pour détecter si un nettoyage est nécessaire.

Selon un mode de réalisation alternatif, l'unité de traitement 25 peut être située en dehors du système de nettoyage 1, par exemple au niveau d'une unité centrale du véhicule automobile.

Selon un troisième mode de réalisation représenté sur les figures 6 et 7, la paroi de confinement 11 peut également être mobile en translation. Dans ce cas, une roue dentée est par exemple montée sur l'arbre de sortie 23a de l'actionneur 23, par exemple un actionneur électrique, et une crémaillère 22 est reliée à la paroi de confinement 11 pour permettre son déplacement en translation comme indiqué par la flèche F. Ainsi, la paroi de confinement 11 est déplacée de bas en haut pour passer de la position escamotée (figure 6) à la position de nettoyage (figure 7). En position de nettoyage représentée sur la figure 7, l'élément de projection 5 vient en regard de l'objectif du capteur optique 3 de sorte que l'actionnement de la pompe 9 provoque la projection du liquide de nettoyage sur l'objectif du capteur optique 3. Le liquide de nettoyage s'écoule ensuite par gravité vers le bas de la paroi de confinement 11 puis vers la conduite d'évacuation 15. La paroi de confinement 11 est par exemple inclinée pour permettre l'écoulement du liquide de nettoyage vers la conduite d'évacuation 15. Le fonctionnement est similaire à la première variante du premier mode de réalisation décrit sur les figures 1 à 3 hormis le déplacement de la paroi de confinement 11.

La présente invention concerne également un ensemble comprenant un capteur optique 3 et un système 1 de nettoyage du capteur optique 3 tel que décrit précédemment, l'ensemble pouvant comprendre un support 19 du capteur optique 3.

La présente invention concerne aussi un véhicule automobile 100 comprenant au moins un capteur optique 3 et au moins un système de nettoyage 1 associé au capteur optique 3. Différents emplacements du capteur optique 3 sont représentés sur les figures 8 à 10, notamment au niveau d'une porte de coffre, d'un pare-chocs avant ou d'une ouverture latérale mais d'autres emplacements du véhicule sont également envisageables pour l'implantation d'un ensemble comprenant un capteur optique 3 et un système de nettoyage 1 associé. Dans le cas d'un véhicule 100 comprenant plusieurs capteurs optiques 3, ces derniers peuvent être disposés à différents emplacements du véhicule, par exemple au niveau d'un pare-choc avant, d'un pare-choc arrière ou d'une porte latérale. De plus, certains éléments du système de nettoyage 1 peuvent être communs à plusieurs capteurs optiques 3. Un unique réservoir 7 peut par exemple être utilisé pour plusieurs ou pour tous les capteurs optiques 3 du véhicule. L'unité de traitement 25 peut également être commune à différents capteurs optiques 3.

Les différentes parties du tuyau d'approvisionnement 8 et/ou de la conduite d'évacuation 15 peuvent être co-extrudées, c'est-à-dire fabriquées comme un unique tuyau puis découpées selon la longueur voulue pour réduire les coûts de fabrication du système de nettoyage 1.

Le fonctionnement du système de nettoyage 1 va maintenant être décrit pour les deux modes de réalisation (avec un actionneur électrique et avec un actionneur hydraulique).

### 1) Fonctionnement avec actionneur électrique (Fig.1 à 3)

Lorsqu'une commande de nettoyage est reçue par l'unité de traitement 25, cette dernière active l'actionneur électrique 23 pour faire passer la paroi de confinement 11 de la position escamotée (fig.1) à la position de nettoyage (fig.2) de sorte que l'élément de projection 5 vient en regard du capteur optique 3 et qu'une enceinte de récupération 13 est formée autour du capteur optique 3. Puis, l'unité de traitement 25 active la pompe 9 de sorte que du liquide de nettoyage est pompé du réservoir 7 jusqu'à l'élément de projection 5 via le tuyau d'approvisionnement 8. Le liquide de nettoyage est alors projeté sur le capteur optique 3 comme représenté sur la figure 2. Le premier temps prédéterminé d'activation de la pompe 9 est par exemple de quelques secondes (5 secondes par exemple). Le liquide de nettoyage s'écoule alors sur le capteur optique 3 et éventuellement sur la paroi de confinement 11 vers la partie basse 131 de l'enceinte de récupération 13. Le liquide de nettoyage est alors reçu par la conduite d'évacuation 15 dont une extrémité est située au niveau de la partie basse 131 de l'enceinte de confinement 13 pour être redirigé vers le réservoir 7. Dans le cas où le système de nettoyage 1 comprend une pompe supplémentaire 17, cette dernière est également activée par l'unité de traitement 25 pendant un deuxième temps prédéterminé, par exemple dix secondes, pour permettre ou faciliter le retour du liquide de nettoyage vers le réservoir 7 via la conduite d'évacuation 15. Une fois le nettoyage terminé, c'est-à-dire à la fin du premier temps prédéterminé, l'unité de traitement 25 commande l'actionneur électrique 23 pour faire passer la paroi de confinement 11 de la position de nettoyage (fig.2) à la position escamotée (fig.1) de manière à libérer le champ de vision du capteur optique 3 et permettre son utilisation.

### 2) Fonctionnement avec actionneur hydraulique (Fig.4 et 5)

Lorsqu'une commande de nettoyage est reçue par l'unité de traitement 25, cette dernière active la pompe 9 de sorte que du liquide de nettoyage est pompé du réservoir 7 vers le vérin hydraulique 23' via la première partie 8a du tuyau d'approvisionnement 8. Le liquide de nettoyage pompé provoque alors le déplacement du piston 23'd de sa position proximale (fig.4) vers sa position distale (fig.5) en comprimant le moyen élastique de rappel 23'g. Le passage en position distale du piston 23'd permet, d'une part, le passage de la paroi de confinement 11 de la position escamotée (fig.4) à la position de nettoyage (fig.5) de sorte que l'élément de projection 5 vient en regard du capteur optique 3 et qu'une enceinte de récupération 13 est formée autour du capteur optique 3 et, d'autre part, l'alimentation en liquide de nettoyage de l'élément de projection 5 via la deuxième partie 8b du tuyau d'approvisionnement 8. Le liquide de nettoyage est alors projeté sur la capteur optique 3. Le premier temps prédéterminé d'activation de la pompe 9 est par exemple de quelques secondes. Le liquide de nettoyage s'écoule alors sur le capteur optique 3 et sur la paroi de confinement 11 pour les particules ayant été renvoyées par le capteur optique 3 ou ayant coulées de l'élément de projection 5 vers le bas de l'enceinte de récupération 13. Le liquide de nettoyage est alors reçu par la conduite d'évacuation 15 dont une extrémité est située au niveau de la partie basse de l'enceinte de confinement 13 pour être redirigé vers le réservoir 7. Dans le cas où le système de nettoyage 1 comprend une pompe supplémentaire 17, cette dernière est également activée par l'unité de traitement 25 pendant un deuxième temps prédéterminé, par exemple quelques secondes, pour permettre ou faciliter le retour du liquide de nettoyage vers le réservoir 7 via la conduite d'évacuation 15. Une fois le nettoyage terminé, c'est-à-dire à la fin du premier temps prédéterminé, l'unité de traitement 25 désactive la pompe 9. Le moyen élastique de rappel 23'g se détend alors pour faire passer le piston 23'd de sa position distale vers sa position proximale ce qui provoque le déplacement de la paroi de confinement 11 de la position de nettoyage (fig.5) à la position escamotée (fig.4) de manière à libérer le champ de vision du capteur optique 3 et permettre son utilisation.

Ainsi, le système de nettoyage 1 de la présente invention permet un nettoyage efficace de l'objectif du capteur optique 3 grâce à la mobilité de l'élément de projection 5 qui vient en regard du capteur optique 3 lors du nettoyage et permet également de réduire fortement la consommation de liquide de nettoyage grâce à la paroi de confinement 11 qui permet de récupérer ce liquide de nettoyage et de le renvoyer vers le réservoir 7 pour être réutilisé lors d'un nettoyage ultérieur. L'utilisation d'un filtre 16 en amont du réservoir 7 permet de maintenir le liquide de nettoyage propre pendant plusieurs utilisations.

## Revendications

1. Système (1) de nettoyage d'un capteur optique (3), notamment de véhicule automobile, comprenant :
- un élément de projection (5) d'un liquide de nettoyage,
- un réservoir (7) d'un liquide de nettoyage en communication fluidique avec l'élément de projection (5) de liquide de nettoyage,
- une pompe (9) configurée pour pomper le liquide de nettoyage du réservoir (7) vers l'élément de projection (5) du liquide de nettoyage,
**caractérisé en ce qu'**il comprend une paroi de confinement (11) du liquide de nettoyage qui est mobile entre
une position escamotée dans laquelle la paroi de confinement est configurée pour être positionnée hors du champ de vision du capteur optique (3) et
une position de nettoyage dans laquelle la paroi de confinement (11) est configurée pour être positionnée devant le capteur optique (3) de façon à définir une enceinte de récupération (13) du liquide de nettoyage et **en ce qu'**il comprend une conduite d'évacuation (15) du liquide de nettoyage reliée d'une part à l'enceinte de récupération (13) en position de nettoyage et d'autre part au réservoir (7) du liquide de nettoyage.

2. Système (1) selon la revendication 1 dans lequel la paroi de confinement (11) présente sensiblement une forme de calotte sphérique dont la partie concave est configurée pour être orientée vers le capteur optique (3).

3. Système (1) selon la revendication 1 ou 2 dans lequel l'enceinte de récupération (13) est positionnée plus haut que le réservoir (7) lorsque le système est à l'état monté de sorte que l'écoulement du liquide de nettoyage de l'enceinte de récupération du liquide de nettoyage vers le réservoir (7) est réalisé par gravité.

4. Système (1) selon la revendication 1 ou 2 dans lequel le système (1) comprend une pompe supplémentaire (17) disposée dans la conduite d'évacuation (15) du liquide de nettoyage.

5. Système (1) selon l'une des revendications précédentes dans lequel le système (1) comprend également un filtre (16) disposé dans la conduite d'évacuation (15) du liquide de nettoyage.

6. Système (1) selon l'une des revendications précédentes dans lequel le système (1) comprend un support du capteur optique et au moins une partie de la conduite d'évacuation (15) est intégrée dans le support (19) du capteur optique (3).

7. Système (1) selon l'une des revendications précédentes dans lequel l'élément de projection (5) est porté par la paroi de confinement (11)en particulier de manière à venir en regard du capteur optique (3) en position de nettoyage.

8. Système (1) selon la revendication7 dans lequel la paroi de confinement (11) comprend un canal interne d'alimentation (21) relié de manière fluidique à l'élément de projection (5).

9. Système (1) selon l'une des revendications précédentes dans lequel la paroi de confinement (11) est mobile en rotation.

10. Système (1) selon l'une des revendications précédentes comprenant un actionneur (23, 23') configuré pour déplacer la paroi de confinement (11) entre la position escamotée et la position de nettoyage.

11. Système (1) selon la revendication 10 dans lequel l'actionneur (23, 23') est un actionneur électrique (23) présentant en particulier un arbre de sortie (23a) qui est couplé à la paroi de confinement (11).

12. Système (1) selon la revendication 10 dans lequel l'actionneur (23, 23') comprend un vérin hydraulique (23'), notamment comprenant
- un corps de vérin (23'a) comprenant un embout d'entrée (23'b) destiné à être en communication fluidique avec la pompe (9) et un embout de sortie (23'c) destiné à être en communication fluidique avec l'élément de projection (5),
- un piston (23'd) séparant le corps de vérin (23'a) en une première chambre (23'e) en communication fluidique avec l'embout d'entrée (23'b) et une deuxième chambre (23'f), ledit piston (23'd) étant mobile d'une part entre une position proximale dans laquelle le volume de la première chambre (23'e) est minimale et dans laquelle l'embout de sortie (23'c) est en communication fluidique avec la deuxième chambre (23'f) et d'autre part une position distale dans laquelle le volume de la première chambre (23'e) est maximal et dans laquelle l'embout de sortie (23'c) est en communication fluidique avec la première chambre (23'e) de manière à alimenter l'élément de projection (5) en liquide de nettoyage, le déplacement du piston (23'd) de la position proximale à la position distale étant provoqué par le liquide de nettoyage pompé par la pompe (9).

13. Système (1) selon l'une des revendications précédentes dans lequel l'élément de projection (5) est un gicleur configuré pour projeter un liquide de nettoyage à une pression d'entrée dans le gicleur comprise entre 1 et 1,7 bars.

14. Système (1) selon l'une des revendications précédentes dans lequel le système (1) comprend également une unité de traitement (25) configurée pour activer la pompe (9).

15. Ensemble comprenant un capteur optique (3) et un système (1) de nettoyage du capteur optique (3) selon l'une des revendications précédentes.

## Patentansprüche

1. System (1) zur Reinigung eines optischen Sensors (3), insbesondere eines Kraftfahrzeugs, das Folgendes beinhaltet:
- ein Spritzelement (5) einer Reinigungsflüssigkeit,
- einen Behälter (7) einer Reinigungsflüssigkeit in Fluidkommunikation mit dem Spritzelement (5) der Reinigungsflüssigkeit,
- eine Pumpe (9), die dazu konfiguriert ist, die Reinigungsflüssigkeit von dem Behälter (7) zu dem Spritzelement (5) der Reinigungsflüssigkeit zu pumpen, **dadurch gekennzeichnet, dass** es eine Wand (11) zum Einschließen der Reinigungsflüssigkeit beinhaltet, die zwischen Folgendem bewegbar ist:
einer eingefahrenen Position, in der die Einschlusswand dazu konfiguriert ist, außerhalb des Sichtfelds des optischen Sensors (3) positioniert zu sein, und
einer Reinigungsposition, in der die Einschlusswand (11) dazu konfiguriert ist, vor dem optischen Sensor (3) positioniert zu sein, um einen Rückgewinnungsbereich (13) der Reinigungsflüssigkeit zu definieren, und dass es eine Ablaufleitung (15) der Reinigungsflüssigkeit beinhaltet,
die einerseits mit dem Rückgewinnungsbereich (13) in der Reinigungsposition und andererseits mit dem Behälter (7) der Reinigungsflüssigkeit verbunden ist.

2. System (1) nach Anspruch 1, wobei die Einschlusswand (11) im Wesentlichen eine Form einer kugelförmigen Kappe aufweist, deren konkaver Teil dazu konfiguriert ist, zu dem optischen Sensor (3) hin ausgerichtet zu sein.

3. System (1) nach Anspruch 1 oder 2, wobei der Rückgewinnungsbereich (13), wenn sich das System im montierten Zustand befindet, höher als der Behälter (7) positioniert ist, sodass das Strömen der Reinigungsflüssigkeit von dem Rückgewinnungsbereich der Reinigungsflüssigkeit zu dem Behälter (7) durch Schwerkraft erfolgt.

4. System (1) nach Anspruch 1 oder 2, wobei das System (1) eine zusätzliche Pumpe (17) beinhaltet, die in der Ablaufleitung (15) der Reinigungsflüssigkeit angeordnet ist.

5. System (1) nach einem der vorhergehenden Ansprüche, wobei das System (1) außerdem ein Filter (16) beinhaltet, das in der Ablaufleitung (15) der Reinigungsflüssigkeit angeordnet ist.

6. System (1) nach einem der vorhergehenden Ansprüche, wobei das System (1) einen Träger des optischen Sensors beinhaltet und mindestens ein Teil der Ablaufleitung (15) in den Träger (19) des optischen Sensors (3) integriert ist.

7. System (1) nach einem der vorhergehenden Ansprüche, wobei das Spritzelement (5) durch die Einschlusswand (11) insbesondere so getragen wird, dass es in der Reinigungsposition gegenüber dem optischen Sensor (3) zu liegen kommt.

8. System (1) nach Anspruch 7, wobei die Einschlusswand (11) einen internen Zufuhrkanal (21) beinhaltet, der mit dem Spritzelement (5) fluidisch verbunden ist.

9. System (1) nach einem der vorhergehenden Ansprüche, wobei die Einschlusswand (11) drehbar ist.

10. System (1) nach einem der vorhergehenden Ansprüche, das ein Stellglied (23, 23') beinhaltet, das dazu konfiguriert ist, die Einschlusswand (11) zwischen der eingefahrenen Position und der Reinigungsposition zu bewegen.

11. System (1) nach Anspruch 10, wobei das Stellglied (23, 23') ein elektrisches Stellglied (23) ist, das insbesondere eine Abtriebswelle (23a) aufweist, die mit der Einschlusswand (11) gekoppelt ist.

12. System (1) nach Anspruch 10, wobei das Stellglied (23, 23') einen Hydraulikzylinder (23') beinhaltet, der insbesondere Folgendes beinhaltet:
- einen Zylinderkörper (23'a), der einen Eingangsstutzen (23'b), der dazu bestimmt ist, mit der Pumpe (9) in Fluidkommunikation zu stehen, und einen Ausgangsstutzen (23'c), der dazu bestimmt ist, mit dem Spritzelement (5) in Fluidkommunikation zu stehen, beinhaltet,
- einen Kolben (23'd), der den Zylinderkörper (23'a) in eine erste Kammer (23'e), die mit dem Eingangsstutzen (23'b) in Fluidkommunikation steht, und eine zweite Kammer (23'f) trennt, wobei der Kolben (23'd) zwischen einerseits einer proximalen Position, in der das Volumen der ersten Kammer (23'e) minimal ist und in der der Ausgangsstutzen (23'c) mit der zweiten Kammer (23'f) in Fluidkommunikation steht, und andererseits einer distalen Position, in der das Volumen der ersten Kammer (23'e) maximal ist und in der der Ausgangsstutzen (23'c) mit der ersten Kammer (23'e) in Fluidkommunikation ist, um das Spritzmittel (5) mit Reinigungsflüssigkeit zu versorgen, bewegbar ist, wobei die Verschiebung des Kolbens (23'd) von der proximalen Position in die distale Position durch die durch die Pumpe (9) gepumpte Reinigungsflüssigkeit bewirkt wird.

13. System (1) nach einem der vorhergehenden Ansprüche, wobei das Spritzelement (5) eine Düse ist, die dazu konfiguriert ist, eine Reinigungsflüssigkeit mit einem Düseneingangsdruck zwischen 1 und 1,7 bar zu spritzen.

14. System (1) nach einem der vorhergehenden Ansprüche, wobei das System (1) außerdem eine Verarbeitungseinheit (25) beinhaltet, die dazu konfiguriert ist, die Pumpe (9) zu aktivieren.

15. Anordnung, die einen optischen Sensor (3) und ein System (1) zur Reinigung des optischen Sensors (3) nach einem der vorhergehenden Ansprüche beinhaltet.

## Claims

1. A system (1) for cleaning an optical sensor (3), in particular for a motor vehicle, comprising:
- an element (5) for projection of a cleaning liquid,
- a reservoir (7) of a cleaning liquid in fluid communication with the element (5) for projection of cleaning liquid,
- a pump (9) designed to pump the cleaning liquid from the reservoir (7) toward the element (5) for projection of cleaning liquid,
**characterized in that** it comprises a wall (11) for confinement of the cleaning liquid that is able to move between
a retracted position, in which the confinement wall is designed to be positioned outside of the field of view of the optical sensor (3), and
a cleaning position, in which the confinement wall (11) is designed to be positioned in front of the optical sensor (3) such as to define a recovery enclosure (13) for the cleaning liquid, and **in that** it comprises a discharge conduit (15) for the cleaning liquid connected, on the one hand, to the recovery enclosure (13) in the cleaning position and, on the other, to the reservoir (7) of the cleaning liquid.

2. The system (1) as claimed in claim 1, wherein the confinement wall (11) has a substantially spherical cap form, the concave part of which is designed to be oriented toward the optical sensor (3).

3. The system (1) as claimed in claim 1 or 2, wherein the recovery enclosure (13) is positioned higher than the reservoir (7) when the system is in the assembled state such that the cleaning liquid flows under gravity from the enclosure for recovery of the cleaning liquid toward the reservoir (7).

4. The system (1) as claimed in claim 1 or 2, wherein the system (1) comprises an additional pump (17) arranged in the conduit (15) for discharge of the cleaning liquid.

5. The system (1) as claimed in one of the preceding claims, wherein the system (1) also comprises a filter (16) arranged in the conduit (15) for discharge of the cleaning liquid.

6. The system (1) as claimed in one of the preceding claims, wherein the system (1) comprises a support of the optical sensor and at least a part of the discharge conduit (15) is integrated into the support (19) of the optical sensor (3).

7. The system (1) as claimed in one of the preceding claims, wherein the projection element (5) is borne by the confinement wall (11), in particular such as to lie facing the optical sensor (3) in the cleaning position.

8. The system (1) as claimed in claim 7, wherein the confinement wall (11) comprises an internal supply duct (21) connected in a fluid manner to the projection element (5).

9. The system (1) as claimed in one of the preceding claims, wherein the confinement wall (11) is able to move in rotation.

10. The system (1) as claimed in one of the preceding claims, comprising an actuator (23, 23') designed to move the confinement wall (11) between the retracted position and the cleaning position.

11. The system (1) as claimed in claim 10, wherein the actuator (23, 23') is an electric actuator (23) that has in particular an output shaft (23a) coupled to the confinement wall (11).

12. The system (1) as claimed in claim 10, wherein the actuator (23, 23') comprises a hydraulic ram (23'), in particular comprising
- a ram body (23'a) comprising an input end fitting (23'b) intended to be in fluid communication with the pump (9) and an output end fitting (23'c) intended to be in fluid communication with the projection element (5),
- a piston (23'd) separating the ram body (23'a) into a first chamber (23'e) in fluid communication with the input end fitting (23'b) and a second chamber (23'f), said piston (23'd) being able to move, on the one hand, between a proximal position, in which the volume of the first chamber (23'e) is minimal and in which the output end fitting (23'c) is in fluid communication with the second chamber (23'f), and, on the other, a distal position, in which the volume of the first chamber (23'e) is maximal and in which the output end fitting (23'c) is in fluid communication with the first chamber (23'e) such as to supply the projection element (5) with cleaning liquid, the movement of the piston (23'd) from the proximal position to the distal position being generated by the cleaning liquid pumped by the pump (9).

13. The system (1) as claimed in one of the preceding claims, wherein the projection element (5) is a squirter designed to spray a cleaning liquid at an inlet pressure into the squirter of between 1 and 1.7 bar.

14. The system (1) as claimed in one of the preceding claims, wherein the system (1) also comprises a processing unit (25) designed to activate the pump (9).

15. An assembly comprising an optical sensor (3) and a system (1) for cleaning the optical sensor (3) as claimed in one of the preceding claims.
